# FASCICULE DE BREVET EUROPEEN

(11) **EP 3 853 077 B1**
(45) Date de publication et mention de la délivrance du brevet: **14.06.2023**
(21) Numéro de dépôt: 19774150.7
(22) Date de dépôt: 29.08.2019
(51) Int. Cl.: B60R 21/02, B60P 7/14

(54) **DISPOSITIF DE FIXATION POUR VEHICULE UTILITAIRE**
BEFESTIGUNGSVORRICHTUNG FÜR EIN NUTZFAHRZEUG
ATTACHMENT DEVICE FOR A UTILITY VEHICLE

(30) Priorité: 18.09.2018 FR 1858375
(43) Date de publication de la demande: 28.07.2021
(73) Titulaire: PSA Automobiles SA, 78300 Poissy (FR)
(72) Inventeur: VIRY, Patrick, 25200 MONTBELIARD (FR); DONNADIEU, Frederic, 25420 BART (FR); VAZQUEZ, Ruben, 36400 PORRINO (PONTEVEDRA) (ES); VÁZQUEZ SABARIEGO, José Ignacio, 36400 PORRINO (PONTEVEDRA) (ES)
(86) Numéro de dépôt international: PCT/FR2019/051990
(87) Numéro de publication internationale: WO 2020/058589

(56) Documents cités:
- WO-A1-2016/111653
- WO-A1-2017/063676
- WO-A1-2018/051314
- WO-A2-89/10857
- AU-A1- 2009 230 744
- FR-A1- 3 034 730
- FR-A5- 2 100 434
- US-A- 3 590 747
- US-A- 4 049 311
- US-A1- 2008 012 371
- US-A1- 2009 050 772

## Description

La présente invention concerne le domaine des véhicules utilitaires, et en particulier les véhicules utilitaires équipés d'une cloison de séparation destinée à séparer un habitacle du véhicule d'un espace de chargement, de sorte à empêcher des charges (des objets lourds et/ou volumineux) qui sont stockées dans l'espace de chargement, de passer dans l'habitacle en cas de choc véhicule.

Cependant, il peut être intéressant de prévoir une option consistant à offrir une cloison de séparation mobile pour améliorer la modularité du véhicule utilitaire. Le document AU2009230744 décrit un ensemble multi position de cloison de séparation de véhicule comprenant au moins un support adapté pour localiser et verrouiller sur celle-ci de sorte que la paroi de séparation soit verrouillable à des positions prédéterminées le long du support. Le document WO201851314 décrit également une paroi de séparation pour des véhicules utilitaires qui comprend au moins une plaque fixe et une porte coulissante qui peut coulisser par rapport à ladite paroi fixe, prédisposée pour séparer la cabine du véhicule du compartiment de chargement. En contrepartie, il faut prévoir des dispositifs de guidage pour par exemple permettre une translation de la cloison de séparation dans le véhicule. Le document WO2017063676 , qui correspond au préambule de la revendication 1, décrit un véhicule comportant une cloison de séparation mobile fixée à des chariots de guidage coulissant sur des rails, et des moyens de blocage disposés sur chacun des chariots et coopérant avec chacun des rails de manière à bloquer dans une position longitudinale au véhicule la ladite cloison.

De tels dispositifs de guidage comportent typiquement un rail de guidage et un chariot de guidage qui coulisse dans le rail. Pour des raisons de sécurité notamment lors de choc frontal, il est nécessaire d'assurer le blocage de la paroi de séparation. Par ailleurs, en raison des tolérances de fabrication, même en position de blocage, il peut subsister un jeu dans les dispositifs de fixation de la paroi de séparation qui peuvent engendrer des bruits parasites lors des phases de roulage du véhicule.

Un des buts de l'invention est de proposer des dispositifs de fixation à monter en véhicule, qui soient simples à fabriquer, et dont l'installation en véhicule ne requière pas de précaution ni d'opération complexes.

A cet effet, un premier objet de l'invention concerne un véhicule automobile comprenant une cloison de séparation agencée pour séparer un habitacle d'un espace de chargement et un dispositif de fixation de la cloison de séparation, le dispositif de fixation comprenant :
- un chariot de guidage agencé pour recevoir la cloison de séparation (30),
- un rail de guidage agencé pour permettre le déplacement du chariot de guidage selon un longitudinal du véhicule ,
- un verrou supérieur agencé pour bloquer le déplacement du chariot de guidage selon l'axe longitudinal, le verrou supérieur comprenant une butée élastique agencée pour générer une contrainte sur le chariot de guidage contre le rail de guidage dans une deuxième direction perpendiculaire à l'axe longitudinal et comprise dans un plan vertical, le verrou supérieur comprenant en outre un axe de verrouillage pour bloquer le mouvement du chariot de guidage sur le rail de guidage, et un levier de manoeuvre agencé pour déplacer l'axe de verrouillage selon la deuxième direction.

Le dispositif de fixation comprend en outre un verrou inférieur distinct du verrou supérieur et agencé pour bloquer le mouvement de la cloison de séparation selon l'axe longitudinal par rapport à la caisse du véhicule et selon une troisième direction, perpendiculaire à l'axe longitudinal et comprise dans un plan horizontal. Le levier de manoeuvre est monté rotatif et comprend une came qui lors du mouvement de rotation du levier de manoeuvre déplace dans un premier temps l'axe de verrouillage, et dans un deuxième temps, vient exercer une contrainte élastique qui exerce alors à son tour la contrainte sur le chariot selon la deuxième direction, le levier de manoeuvre étant agencé pour comprimer la butée élastique lorsque l'axe de verrouillage est en position de blocage du chariot de guidage, pour générer la contrainte sur le chariot de guidage.
Le dispositif de fixation selon la mise en oeuvre ci-dessus assure un maintien robuste de la cloison de séparation dans la caisse du véhicule. Par ailleurs, la buté élastique et le verrou inférieur permettent de compenser les jeux d'assemblage entre la cloison est les verrous ce qui supprime ou limite les mouvements parasites de la cloison de séparation lors des phase de roulage et réduit ainsi le bruit.

Avantageusement, le dispositif de fixation comprend un moyen de blocage du levier de manoeuvre dans sa position de blocage du déplacement du chariot de guidage.

Avantageusement, le verrou inférieur comprend un axe de verrouillage coopérant avec une gâche pour bloquer le mouvement de la cloison de séparation selon l'axe longitudinal, un moyen de rappel élastique agissant sur l'axe de verrouillage dans la troisième direction et un loquet pour maintenir l'axe de verrouillage dans la position de blocage de la cloison de séparation.

Avantageusement l'axe de verrouillage est une tige comprenant une crémaillère dans laquelle vient s'engager le loquet lors du blocage de l'axe de verrouillage dans sa position de blocage de la cloison de séparation.

Avantageusement le verrou supérieur et le verrou inférieur sont montés sur la cloison de séparation.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue isométrique d'un intérieur de véhicule utilitaire, comprenant une cloison de séparation séparant un habitacle d'un espace de chargement du véhicule utilitaire ;
- la figure 2 représente une vue avant du véhicule de la figure 1 ;
- la figure 3 représente un détail d'un verrou supérieur du dispositif de fixation de la paroi de séparation,
- la figure 4 représente un détail d'un verrou inférieur du dispositif de fixation de la paroi de séparation,

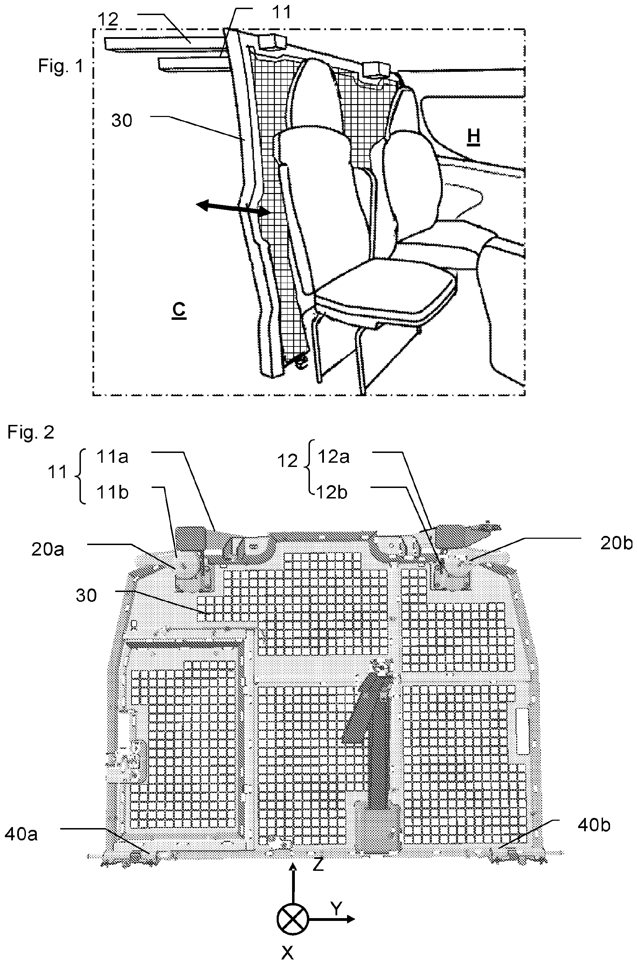

La figure 1 représente un véhicule utilitaire avec une cloison de séparation 30 qui peut coulisser le long d'un axe longitudinal X du véhicule. A cet effet, deux dispositifs de guidage 11 et 12 sont prévus.

Comme le montre la figure 2, chaque dispositif de guidage est principalement formé par un rail de guidage 11a et 12a, et par un chariot de guidage 11b et 12b respectivement.

La cloison de séparation 30 est vissée sur chacun des chariots de guidage 11b et 12b. Afin de maintenir en position la cloison de séparation 30 dans véhicule, celle-ci comprend un dispositif de fixation 20a, 20b, 40a, 40b. Ce dispositif de fixation a pour fonction de maintenir fermement la cloison de séparation 30 en place dans le véhicule lors des phases de roulage mais également lors d'un choc du véhicule.

Le dispositif de fixation comprend un verrou supérieur 20a, 20b pour chaque chariot de guidage 11b, 12b et au moins un verrou inférieur 40a, 40b situé par exemple sur la périphérie et en partie basse la cloison de séparation 30. Le verrou supérieur 20a, 20b assure le blocage de la cloison par rapport au rail de guidage 11a, 11b, Le verrou inférieur 40a, 40b assure le blocage de la cloison de séparation par rapport à la caisse (non représentée) du véhicule.

Le verrou supérieur 20a, 20b comprend d'une part un moyen pour bloquer le mouvement le chariot de guidage 11b, 12b dans le rail de guidage 11a, 12b et d'autre part une butée élastique (non représentée) qui vient générer un contrainte sur le chariot de guidage 11b, 12b contre le rail de guidage 11a, 11b. En d'autre terme, le moyen de blocage du verrou supérieur 11b, 11 assure un verrouillage selon l'axe longitudinal X du véhicule. La butée élastique assure une contrainte selon une deuxième direction Z transversale à l'axe longitudinal X et sensiblement verticale. Cette contrainte permet notamment de mettre en tension la cloison de séparation 30 pour d'une part compenser les jeux d'assemblage notamment entre le chariot de guidage 11b, 12b et le rail de guidage 12a, 12b et d'autre part compenser des déformation de la cloison de séparation 30 liées à son propre poids ou aux accélération du véhicule. Ainsi les mouvements parasites de la cloison de séparation 30 selon l'axe longitudinal X et selon la deuxième direction Z sont supprimés ou pour le moins fortement réduite ce qui réduit les bruits de la cloison de séparation 30 lors des phases de roulage.

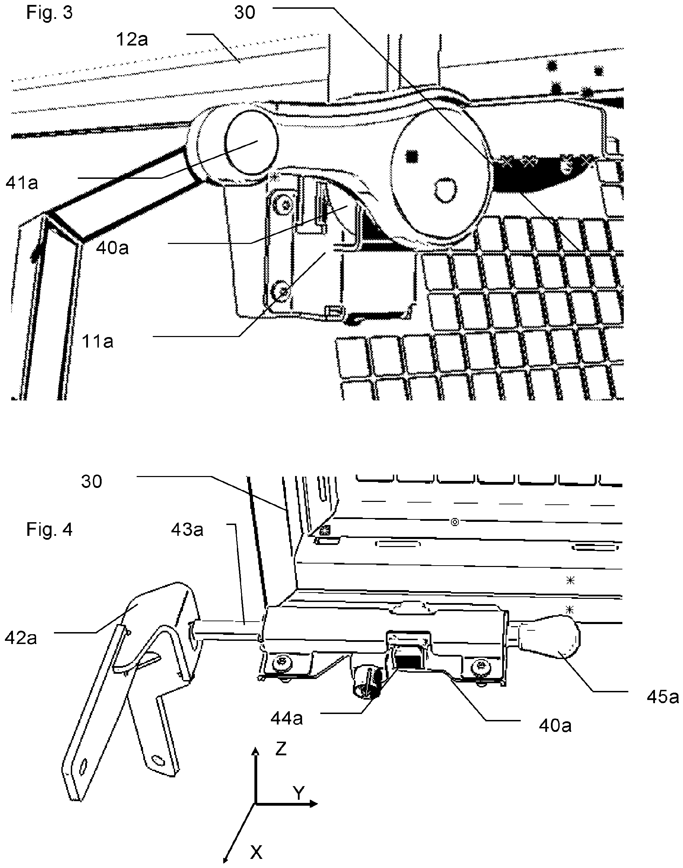

Comme représenté sur la figure 3, le verrou supérieur 40a comprend un levier de manoeuvre 41a pour déplacer un axe de verrouillage (non représenté). L'axe de verrouillage est monté sur le chariot de guidage 11a par exemple selon la deuxième direction Z verticale et vient s'engager dans un orifice ou une gâche (non représenté) formée sur le rail 12a de guidage. Ainsi lorsque l'axe de verrouillage est engagé dans l'orifice, le mouvement du chariot de guidage 11a est verrouillé selon l'axe longitudinal X. Le levier de manoeuvre 41a est également agencé pour mettre sous contrainte la buté élastique lorsque de l'axe de verrouillage est engagé dans le rail de guidage 12a. A titre d'exemple, le levier de manoeuvre 41a est monté rotatif et comprend une came (non représentée). Lors du mouvement de rotation du levier de manoeuvre 41a, la came déplace dans un premier temps l'axe de verrouillage. Dans un deuxième temps, la came vient exercer une contrainte élastique qui exerce alors à son tour la contrainte sur le chariot selon la deuxième direction Z. En fin de mouvement de rotation le levier de manoeuvre est maintenu en position, par exemple par un loquet pour empêcher tout désengagement intempestif de l'axe de verrouillage.

Comme représenté sur la figure 4, le verrou inférieur 40a comprend une tige ou axe de verrouillage 43a qui vient s'engager dans une gâche 42a fixée sur la caisse (non représentée du véhicule). Selon l'invention, l'axe de verrouillage 43a est orienté dans une troisième direction Y perpendiculaire à l'axe longitudinale X et sensiblement horizontale. On comprend que lorsque que l'axe de verrouillage 43a est engagé dans la gâche 42a, la cloison de séparation 30 est bloquée selon l'axe longitudinal X. Ainsi, tout mouvement de balancier de la cloison de séparation 30 lors de phase de roulage est supprimé ou pour le moins l'amplitude de tel mouvement est très réduit.

Par ailleurs, selon l'invention le verrou inférieur 40a comprend un moyen de rappel (non représenté) qui vient solliciter l'axe de verrouillage dans la gâche 42a selon la troisième direction Y. En d'autre terme, le moyen de rappel pousse l'axe de verrouillage 43a jusqu'en buté dans la gâche 42a. Le moyen de rappel est par exemple un ressort monté dans le verrou inférieur 40a.

Afin de maintenir l'axe de verrouillage 43a dans cette position, le verrou inférieur 40a comprend un loquet 44a venant en prise sur une crémaillère (non représentée) pratiqué sur l'axe de verrouillage (44a). Ainsi, l'axe de verrouillage 43a est en buté mécanique d'une part au fond de la gâche 42A et d'autre part par l'intermédiaire du loquet 44a. Il n'existe donc plus de jeu fonctionnel dans le positionnement de l'axe de verrouillage 43a ce qui permet d'assurer également un blocage de la cloison de séparation 30 selon la deuxième direction Z.

L'axe comprend également une poigné de préhension 45a sur son extrémité opposée à l'extrémité s'engageant dans la gâche 42a.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Véhicule automobile comprenant une cloison de séparation (30) agencée pour séparer un habitacle d'un espace de chargement,
et un dispositif de fixation de la cloison de séparation (30), le dispositif de fixation comprenant :
- un chariot de guidage (11b, 12b) agencé pour recevoir la cloison de séparation (30),
- un rail de guidage (11a, 12a) agencé pour permettre le déplacement du chariot de guidage (11b, 12b) selon un longitudinal (X) du véhicule,
- un verrou supérieur (20a, 20b) bloquant le déplacement du chariot de guidage (11b, 12b) selon l'axe longitudinal (X), le verrou supérieur (20a, 20b) comprenant une butée élastique générant une contrainte sur le chariot de guidage (11b, 12b) contre le rail de guidage dans une deuxième direction verticale (Z) perpendiculaire à l'axe longitudinal (X), le verrou supérieur (40a, 40b) comprenant en outre un axe de verrouillage pour bloquer le mouvement du chariot de guidage (11b, 12b) sur le rail de guidage (11a, 12a), et un levier de manoeuvre (41a) agencé pour déplacer l'axe de verrouillage selon la deuxième direction (Z),
- le dispositif de fixation comprend en outre un verrou inférieur (40a, 40b) distinct du verrou supérieur (20a, 20b) et agencé pour bloquer le mouvement de la cloison de séparation selon l'axe longitudinal (X) par rapport à la caisse du véhicule et selon une troisième direction (Y), perpendiculaire à l'axe longitudinal (X) et comprise dans un plan horizontal,
**caractérisé en ce que** le levier de manoeuvre (41a) est monté rotatif et comprend une came qui lors du mouvement de rotation du levier de manoeuvre (41a) déplace dans un premier temps l'axe de verrouillage, et dans un deuxième temps, vient exercer une contrainte élastique qui exerce alors à son tour la contrainte sur le chariot selon la deuxième direction (Z), le levier de manoeuvre (41a) étant agencé pour comprimer la butée élastique lorsque l'axe de verrouillage est en position de blocage du chariot de guidage, pour générer la contrainte sur le chariot de guidage (11b, 11a).

2. Véhicule la revendication précédente, dans lequel le dispositif comprend un moyen de blocage du levier de manoeuvre (41a) dans sa position de blocage du déplacement du chariot de guidage (11b, 12b).

3. Véhicule selon l'une des revendications précédentes, dans lequel le verrou inférieur (40a, 40b) comprend un axe de verrouillage (43a) coopérant avec une gâche (42a) pour bloquer le mouvement de la cloison de séparation (30) selon l'axe longitudinal X, un moyen de rappel élastique agissant sur l'axe de verrouillage (43a) dans la troisième direction Z et un loquet (44a) pour maintenir l'axe de verrouillage (43a) dans la position de blocage de la cloison de séparation.

4. Véhicule selon la revendication précédente, dans lequel l'axe de verrouillage (43a) est une tige comprenant une crémaillère dans laquelle vient s'engager le loquet (44a) lors du blocage de l'axe de verrouillage (43a) dans sa position de blocage de la cloison de séparation (30).

5. Véhicule selon l'une des revendications précédentes, dans lequel le verrou supérieur (40a, 40b) et le verrou inférieur (20a, 20b) sont montés sur la cloison de séparation (30).

6. Véhicule selon l'une des revendications précédentes, dans lequel le verrou supérieur (40a, 40b) et le verrou inférieur (20a, 20b) sont monté sur des côtés opposés de la cloison de séparation (30).

## Patentansprüche

1. Kraftfahrzeug mit einer Trennwand (30) zur Trennung eines Fahrgastraums von einem Laderaum,
und einer Befestigungsvorrichtung für die Trennwand (30), wobei die Befestigungsvorrichtung Folgendes umfasst:
- einem Führungswagen (11b, 12b) zur Aufnahme der Trennwand (30),
- eine Führungsschiene (11a, 12a), die so angeordnet ist, dass sie die Bewegung des Führungsschlittens (11b, 12b) entlang einer Fahrzeuglängsachse (X) ermöglicht,
- ein oberer Riegel (20a, 20b), der die Bewegung des Führungsschlittens (11b, 12b) entlang der Längsachse (X) blockiert, wobei der obere Riegel (20a, 20b) einen elastischen Anschlag aufweist, der den Führungsschlitten (11b, 12b) gegen die Führungsschiene in einer zweiten vertikalen Richtung (Z) senkrecht zur Längsachse (X) drückt, wobei der obere Riegel (40a, 40b) ferner einen Verriegelungsbolzen aufweist, um die Bewegung des Führungsschlittens (11b, 12b an der Führungsschiene (11a, 12a) und einem Betätigungshebel (41a), der zur Bewegung des Verriegelungsbolzens in die zweite Richtung (Z) angeordnet ist,
- die Befestigungsvorrichtung ferner einen von dem oberen Riegel (20a, 20b) getrennten unteren Riegel (40a, 40b) aufweist, der so angeordnet ist, dass er die Bewegung der Trennwand entlang der Längsachse (X) relativ zum Wagenkasten des Fahrzeugs und entlang einer dritten Richtung (Y), senkrecht zur Längsachse (X) und in einer horizontalen Ebene, blockiert,
**dadurch gekennzeichnet, dass** der Betätigungshebel (41a) drehbar gelagert ist und einen Nocken aufweist, der bei der Drehbewegung des Betätigungshebels (41a) die Verriegelungsachse in einem ersten Schritt verschiebt und in einem zweiten Schritt eine elastische Spannung ausübt, die dann wiederum die Spannung auf den Schlitten in der zweiten Richtung (Z) ausübt, wobei der Betätigungshebel (41a) so angeordnet ist, dass er den elastischen Anschlag komprimiert, wenn die Verriegelungsachse in der Verriegelungsposition des Führungsschlittens ist, um die Spannung auf den Führungsschlitten (11b, 11a) zu erzeugen.

2. Fahrzeug nach dem vorhergehenden Anspruch, wobei die Vorrichtung Mittel zum Blockieren des Betätigungshebels (41a) in seiner Blockierposition der Bewegung des Führungswagens (11b, 12b) umfasst.

3. Fahrzeug nach einem der vorhergehenden Ansprüche, bei dem die untere Verriegelung (40a, 40b) einen Verriegelungsbolzen (43a), der mit einem Schließer (42a) zusammenwirkt, um die Bewegung der Trennwand (30) entlang der Längsachse X zu blockieren, ein elastisches Rückstellmittel, das auf den Verriegelungsbolzen (43a) in der dritten Richtung Z wirkt, und eine Verriegelung (44a) aufweist, um den Verriegelungsbolzen (43a) in der Verriegelungsposition der Trennwand zu halten.

4. Fahrzeug nach dem vorhergehenden Anspruch, bei dem der Verriegelungsbolzen (43a) eine Stange mit einer Zahnstange ist, in die der Riegel (44a) eingreift, wenn der Verriegelungsbolzen (43a) in seiner Verriegelungsposition der Trennwand (30) verriegelt wird.

5. Fahrzeug nach einem der vorhergehenden Ansprüche, wobei die obere Verriegelung (40a, 40b) und die untere Verriegelung (20a, 20b) an der Trennwand (30) angebracht sind.

6. Fahrzeug nach einem der vorhergehenden Ansprüche, wobei die obere Verriegelung (40a, 40b) und die untere Verriegelung (20a, 20b) an gegenüberliegenden Seiten der Trennwand (30) angebracht sind.

## Claims

1. Motor vehicle comprising a partition (30) arranged to separate a passenger compartment from a loading space,
and a fastening device for the partition wall (30), the fastening device comprising:
- a guide carriage (11 b, 12 b) arranged to receive the separation partition (30),
- guide rail (11 a, 12 a) arranged to allow the movement of the guide carriage (11 b, 12 b) along a longitudinal (X) of the vehicle,
- an upper lock (20a, 20b) blocking the movement of the guide carriage (11b, 12b) along the longitudinal axis (X), the upper lock (20a, 20b) comprising an elastic stop generating a stress on the guide carriage (11b, 12b) against the guide rail in a second vertical direction (Z) perpendicular to the longitudinal axis (X), the upper lock (40a, 40b) further comprising a locking pin for blocking the movement of the guide carriage (11b, 12b) on the guide carriage guide rail (11a, 12a), and an operating lever (41a) arranged to move the locking pin in the second direction (Z),
- the fixing device further comprises a lower lock (40 a, 40 b) distinct from the upper lock (20 a, 20 b) and arranged to block the movement of the partition along the longitudinal axis (X) with respect to the body of the vehicle and in a third direction (Y), perpendicular to the longitudinal axis (X) and included in a horizontal plane,
**characterized in that** the operating lever (41a) is mounted to rotate and comprises a cam which, during the rotational movement of the operating lever (41a), first displaces the locking axis, and, secondly, exerts an elastic stress which then exerts the stress on the carriage in its turn in the second direction (Z), the operating lever (41a) being arranged to compress the elastic stop when the locking axis is in the blocking position of the guide carriage, in order to generate the stress on the guide carriage (11b, 11a).

2. Vehicle according to the preceding claim, in which the device comprises a means for locking the operating lever (41a) in its position for locking the movement of the guide carriage (11b, 12b).

3. Vehicle according to one of the preceding claims, in which the lower latch (40a, 40b) comprises a locking pin (43a) cooperating with a keeper (42a) to block the movement of the partition (30) along the longitudinal axis X, an elastic return means acting on the locking pin (43a) in the third direction Z and a latch (44a) to maintain the locking pin (43a) in the blocking position of the partition.

4. Vehicle according to the preceding claim, in which the locking pin (43a) is a rod comprising a rack into which the latch (44a) engages when the locking pin (43a) is locked in its position for locking the partition wall (30).

5. Vehicle according to one of the preceding claims, in which the upper lock (40a, 40b) and the lower lock (20a, 20b) are mounted on the partition wall (30).

6. Vehicle according to one of the preceding claims, in which the upper lock (40a, 40b) and the lower lock (20a, 20b) are mounted on opposite sides of the partition wall (30).
